# EUROPÄISCHE PATENTSCHRIFT

(11) **EP 0 610 270 B1**
(45) Veröffentlichungstag und Bekanntmachung des Hinweises auf die Patenterteilung: **26.07.1995**
(21) Anmeldenummer: 92921459.1
(22) Anmeldetag: 21.10.1992
(51) Int. Cl.: G11B 15/675

(54) **KASSETTEN-LADEVORRICHTUNG**
CASSETTE LOADING DEVICE
DISPOSITIF DE CHARGEMENT DE CASSETTES

(30) Priorität: 30.10.1991 DE 4135834
(43) Veröffentlichungstag der Anmeldung: 17.08.1994
(73) Patentinhaber: DEUTSCHE THOMSON-BRANDT GMBH, 78048 Villingen-Schwenningen (DE)
(72) Erfinder: SCHANDL, Hartmut, A-1100 Wien (AT); WEISSER, Fritz, D-7742 St. Georgen (DE)
(74) Vertreter: Einsel, Robert, Dipl.-Ing.
(86) Internationale Anmeldenummer: EP9202407
(87) Internationale Veröffentlichungsnummer: WO9309537

(56) Entgegenhaltungen:
- EP-A- 0 150 128
- EP-A- 0 349 293
- EP-A- 0 392 491
- EP-A- 0 449 330
- DE-A- 4 010 750
- GB-A- 2 187 879
- PATENT ABSTRACTS OF JAPAN vol. 14, no. 245 (P-1052)(4188) 24. Mai 1990

## Beschreibung

Die Erfindung betrifft eine Kassetten-Ladevorrichtung für ein Kassettengerät zur Informationsaufzeichnung und/oder -wiedergabe nach dem Oberbegriff des Anspruchs 1.

Eine derartige Kassetten-Ladevorrichtung kann für beliebige Audio- und Videogeräte Anwendung finden, bei denen ein Speichermedium zur Informationsaufzeichnung und/oder -wiedergabe, wie ein Magnetband, eine Magnetplatte oder ähnliches, in einer Kassette eingeführt wird.

Bei einem handelsüblichen Videorecorder z.B. besteht eine derartige Kassetten-Ladevorrichtung im wesentlichen aus einem auf dem Laufwerkchassis ortsfest angeordneten Führungsrahmen und aus einer antreibbaren Kassetten-Aufnahmevorrichtung, die im Führungsrahmen so geführt ist, daß sie zwischen einer Kassettenlade- und einer Kassettenbetriebsstellung bewegt werden kann. In der Ladestellung kann die Kassette in die Aufnahmevorrichtung eingeführt bzw. aus dieser entnommen werden. In der Betriebsstellung sind die Bandwickel bzw. die beiden Winkelkerne einer Kassette mit antreibbaren Wickeldornen des Laufwerkchassis in Eingriff. Die Wickelkerne sind in der Kassette beweglich gelagert. Zwecks Positionierung der Kassette zur Chassisebene sind auf ihrer Antriebsseite Fangöffnungen ausgebildet, die mit auf dem Chassis entsprechend angeordneten Positionierungsstiften in Eingriff gebracht werden.

Bei einem derartigen Recorder, bei dem eine Kassette z.B. durch eine entsprechende Öffnung in der Geräte-Gehäusefront eingeführt wird bzw. nach Beendigung einer Aufzeichnung, Wiedergabe oder eines Umspulbetriebes entnommen werden kann, ist der Ladevorgang im wesentlichen durch eine zum Laufwerkchassis parallele (horizontale) sowie durch eine zum Laufwerkchassis senkrechte Bewegung der Kassetten-Aufnahmevorrichtung gekennzeichnet. Dabei wird die in der Aufnahmevorrichtung befindliche Kassette üblicherweise mit Hilfe von an der Aufnahmevorrichtung angeordneten Blattfedern reibschlüssig gehalten. Damit ist allerdings der Nachteil verbunden, daß wegen der zum Halten der Kassette erforderlichen hohen Reibschlußkräfte relativ hohe manuelle Kräfte zum Einschieben der Kassette bzw. zum Herausziehen der Kassette aus der Aufnahmevorrichtung aufgebracht werden müssen. Außerdem wird durch den Reibschluß eine genaue Positionierung der Kassette in der Aufnahmevorrichtung während des Ladevorganges nicht gewährleistet, so daß eine zusätzliche Orientierung mit den Positionierungsstiften erforderlich ist.

Aus der Patentschrift DE 37 07 830 ist eine Kassetten-Ladevorrichtung bekannt, bei der zur Vermeidung vorgenannter Nachteile die Kassetten-Aufnahmevorrichtung eine Arretiervorrichtung mit einem Einrastblock aufweist, der beim Einschieben einer Kassette formschlüssig in eine Kassettenaussparung einrastet, so daß die Kassette während des gesamten Ladevorgangs arretiert ist. Die Kassettenaussparung ist auf der antriebsabgewandten Gehäuseseite einer solchen Kassette ausgebildet. Diese Arretiervorrichtung ist jedoch nur bedingt anwendbar, da Kassetten anderer Systemnormen wie z.B. der VHS-Norm eine derartige Aussparung auf der antriebsabgewandten Seite nicht aufweisen.

Es ist daher Aufgabe der Erfindung, bei einer Kassetten-Ladevorrichtung für ein Kassettengerät eine Kassettenarretierung für den Lade- bzw. Entladebetrieb zu schaffen, die hinsichtlich ihrer Anwendbarkeit nicht auf eine Systemnorm beschränkt ist, keine zusätzlichen Orientierungs- und Positionierungsmittel erfordert und dennoch einen sicheren Halt und eine genaue Positionierung der Kassette gewährleistet. Zusätzlich sollen bei gleichzeitig erhöhter Ladegeschwindigkeit die Positionierungsgeräusche und die mechanischen Belastungen von Gerät und Kassette verringert werden.

Aus der JP-A-262757 ist eine Kassetten-Ladevorrichtung mit einem als Aufnahmevorrichtung arbeitenden Kassettenhalter bekannt, bei dem auf elastischen Klemmgliedern ausgebildete Vorsprünge vorgesehen sind, die beim Einschieben der Kassette in die im Kassettengehäuse antriebsseitig vorgesehenen Fangöffnungen einrasten, so daß die Kassette während des Lade- bzw. Entladevorganges arretiert ist. Die Vorsprünge sind auf ihrer Rückseite so ausgebildet, daß mit ihnen ferner eine zentrierende Wirkung auf die Kassette ausgeübt wird, sobald sie mit entsprechend auf dem Laufwerkchassis angeordneten Positionierungsstiften in Eingriff gelangen. Eine derartige Aufnahmevorrichtung ist konstruktiv jedoch mit einem, zwischen der Kassettenhalte- und der Kassetteneinschieb- bzw. Kassettenherausziehkraft zu schließenden Kompromiß behaftet und daher nur bedingt verwendbar.

Die Aufgabe wird durch die im Kennzeichen des Anspruchs 1 angegeben Merkmale gelöst.

Der Erfindung liegt die Idee zugrunde, bei einer Bandkassette zur Informationsaufzeichnung und/oder -wiedergabe in einem Recorder die im Kassettengehäuse antriebsseitig ausgebildeten Fangöffnungen, die für die Positionierung der Kassette auf dem Laufwerkchassis des Recorders vorgesehen sind, auch zur Arretierung der Kassette während ihres Lade- bzw. Entladevorganges zu nutzen.

Anstelle der eingangs erwähnten, auf dem Laufwerkchassis angeordneten Positionierungsstifte werden erfindungsgemäß im Laufwerkchassis Positionierungslöcher und in der Aufnahmevorrichtung der Kassetten-Ladevorrichtung schwenkbare Positionierungsstifte vorgesehen, die mit der Ladeeinrichtung derart zusammenwirken, daß beim Einschieben der Kassette die Positionierungsstifte in die Fangöffnungen eingreifen, während des Ladevorganges mit den Fangöffnungen in Eingriff bleiben und bei Erreichen der Kassetten-Betriebsstellung mit ihrem anderen Ende mit den Positionierungslöchern im Chassis in Eingriff gelangen.

Da Kassetten unterschiedlicher Systemnorm derartige Fangöffnungen aufweisen, die in erfindungsgemäßer Weise für den Lade- bzw. Entladevorgang einer Kassette ausgenutzt werden können, ist die Erfindung nicht auf Ladevorrichtungen für Kassetten einer Systemnorm beschränkt, und es wird ohne zusätzliche Orientierungs- und Positionierungsmittel ein sicherer Halt und eine genaue Positionierung der Kassette erreicht.

Die Arretierung der Kassette während des gesamten Lade- bzw. Entladevorganges mittels der Positionierungsstifte gestattet eine Erhöhung der Antriebsgeschwindigkeit der Aufnahmevorrichtung mit großen positiven und negativen Beschleunigungswerten, wodurch Lade- und Entladezeit der Kassette erheblich verkürzt werden, und eine Verringerung der Positionierungsgeräusche und mechanische Belastungen von Gerät und Kassette.

Im folgenden wird die Erfindung anhand von Zeichnungen in einem Ausführungsbeispiel beschrieben. Es zeigen:
- Fig. 1: in perspektivischen Darstellungen eine bekannte Bandkassette,
- Fig. 2: in Draufsicht einen Seitenbereich eines Laufwerkchassis mit der Kassetten-Ladevorrichtung für eine Bandkassette,
- Fig. 3: in Frontansicht eine Kassetten-Ladevorrichtung auf dem Laufwerkchassis entsprechend Fig. 2,
- Fig. 4: eine perspektivische Darstellung eines ersten Schwenkhebels in der Kassetten-Aufnahmevorrichtung der Kassetten-Ladevorrichtung nach Fig. 3 mit Positionierungszapfen für die Kassette nach Fig. 1,
- Fig. 5: eine perspektivische Darstellung eines zweiten Schwenkhebels in der Kassetten-Aufnahmevorrichtung der Kassetten-Ladevorrichtung nach Fig. 3,
- Fig. 6: eine Hebevorrichtung für die Kassetten-Aufnahmevorrichtung der Kassetten-Ladevorrichtung nach Fig. 3,
- Fig. 7: einen Schieber in der Kassetten-Aufnahmevorrichtung der Kassetten-Ladevorrichtung nach Fig. 3,
- Fig. 8: die Lade- bzw. Entladestellung der Kassetten-Aufnahmevorrichtung,
- Fig. 9: eine erste Zwischenstellung der Kassetten-Aufnahmevorrichtung während des Lade- bzw. Entladevorganges,
- Fig. 10: eine zweite Zwischenstellung der Kassetten-Aufnahmevorrichtung während des Lade- bzw. Entladevorganges,
- Fig. 11: eine dritte Zwischenstellung der Kassetten-Aufnahmevorrichtung während des Lade- bzw. Entladevorganges,
- Fig. 12: die Betriebsstellung der Kassetten-Aufnahmevorrichtung,
- Fig. 13: ein Diagramm, in dem der Geschwindigkeitsverlauf der Kassetten-Aufnahmevorrichtung der Kassetten-Ladevorrichtung nach Fig. 3 während des Lade- bzw. Entladevorganges dargestellt ist,
- Fig. 14: eine Steuerscheibe der Kassetten-Ladevorrichtung nach Fig. 3.

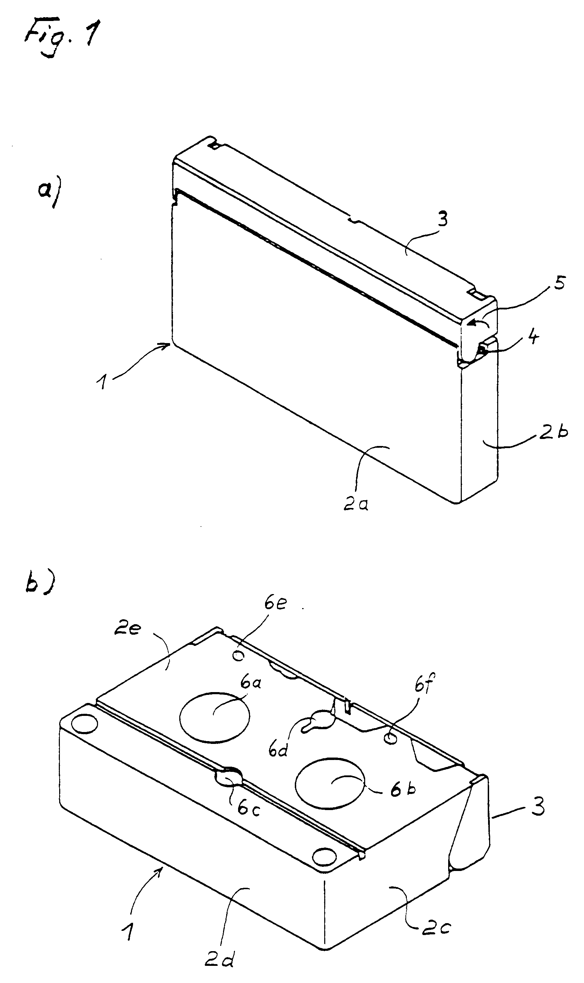

Fig. 1 zeigt in Darstellungen a) und b) eine rechteckige Kassette 1 gemäß der VHS-Norm, die einen nicht dargestellten bandförmigen Informationsträger enthält. In der perspektivischen Darstellung a) gemäß Fig. 1 werden von der bekannten Bandkassette die Kassette 1 mit oberer Gehäusewand 2a, die aufschwenkbare Bandschutzklappe 3 sowie die rechte Gehäusewand 2b mit dem Verriegelungshebel 4 für die Bandschutzklappe 3 gezeigt. Die Bandschutzklappe 3, die zusammen mit einer durch die verriegelte Bandschutzklappe 3 verdeckte Gehäusewand die vordere Seite der Kassette 1 bildet, wird während des Kassetten-Ladevorganges in einer durch einen Pfeil 5 gekennzeichneten Richtung aufgeschwenkt, so daß der Informationsträger, im folgenden Band genannt, zur Informationsaufzeichnung und/oder - wiedergabe mittels einer nicht dargestellten Laufwerk-Fädelmechanik aus der Kassette 1 hervorgezogen werden kann. Der Informationsträger ist auf zwei ebenfalls nicht dargestellten spulenförmigen Wickelkörpern in der Kassette 1 gelagert.

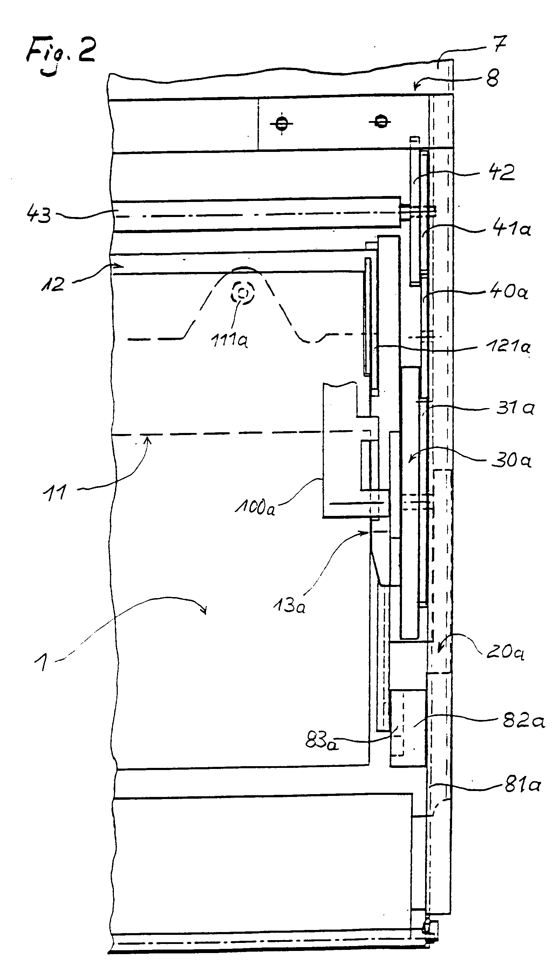

In der perspektivischen Darstellung b) gemäß Fig. 1 sind von der Kassette 1 die hintere Gehäusewand 2d, die linke Gehäusewand 2c, die Bandschutzklappe 3 sowie die untere Gehäusewand 2e dargestellt. Die untere Gehäusewand 2e, die die Antriebsseite der Kassette 1 bildet, enthält verschiedene Öffnungen 6a - 6f, von denen die Öffnungen 6a, 6b für den Eingriff Antriebsdornen in die Wickelkörper und die Öffnungen 6e, 6f als Fangöffnungen für die Positionierung der Kassette 1 auf einem Laufwerkchassis 7 (Fig.2, Fig.3 und Fig.8 - Fig.12) vorgesehen sind. Die weitere, erfindungsgemäße Verwendung der Fangöffnungen 6e, 6f wird nachfolgend beschrieben.

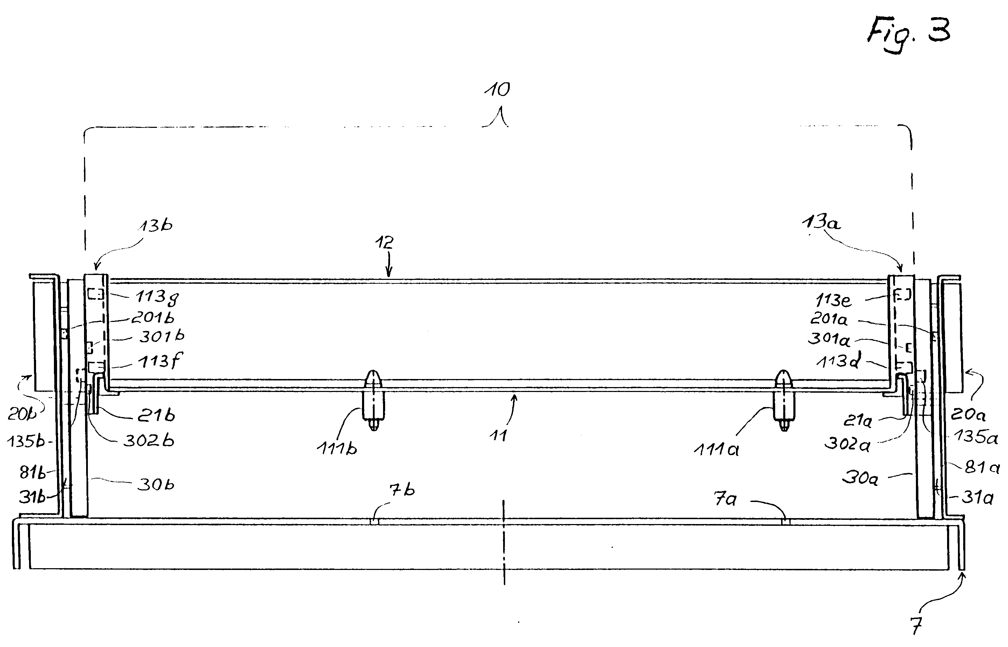

Die Begriffe "rechts", "rechtsseitig", "links", "linksseitig", "vorn" und "hinten" werden hier in Bezug auf die Richtung verwandt, in der die Kassette 1 in eine Kassetten-Aufnahmevorrichtung 10 (Fig.3) einer Kassetten-Ladevorrichtung eingeschoben wird.

Das Laufwerk enthält Fig. 2 und Fig. 3 entsprechend ein Chassis 7, auf dem eine Kassetten-Ladevorrichtung angeordnet ist. Die Kassetten-Ladevorrichtung besteht im wesentlichen aus einem Führungsrahmen 8, aus einer bewegbaren Kassetten-Aufnahmevorrichtung 10, die in Fig. 3 detailliert dargestellt ist, aus senkrecht zum Chassis 7 synchron bewegbaren Hebevorrichtungen 20a; 20b und aus synchron angetriebenen Steuerscheiben 30a; 30b, durch die die Kassetten-Aufnahmevorrichtung 10 mit Hilfe von Zapfen 201a, 301a, 302a, 135a; 201b, 301b, 302b, 135b und Führungen angetrieben bzw. gesteuert wird.

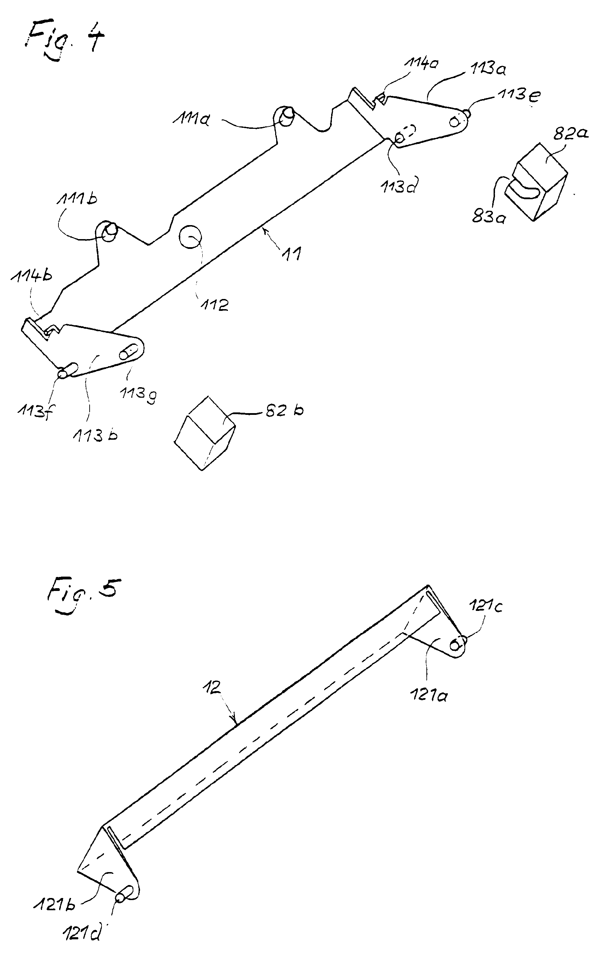

In Fig. 1 - Fig. 3 sowie in den nachfolgenden Figuren 4 - 12 und 14 sind übereinstimmende Gegenstände mit den gleichen Bezugszeichen versehen. Da beide Seiten der Kassetten-Ladevorrichtung im wesentlichen gleichartig ausgebildet sind, ist nur eine Seite detailliert dargestellt.

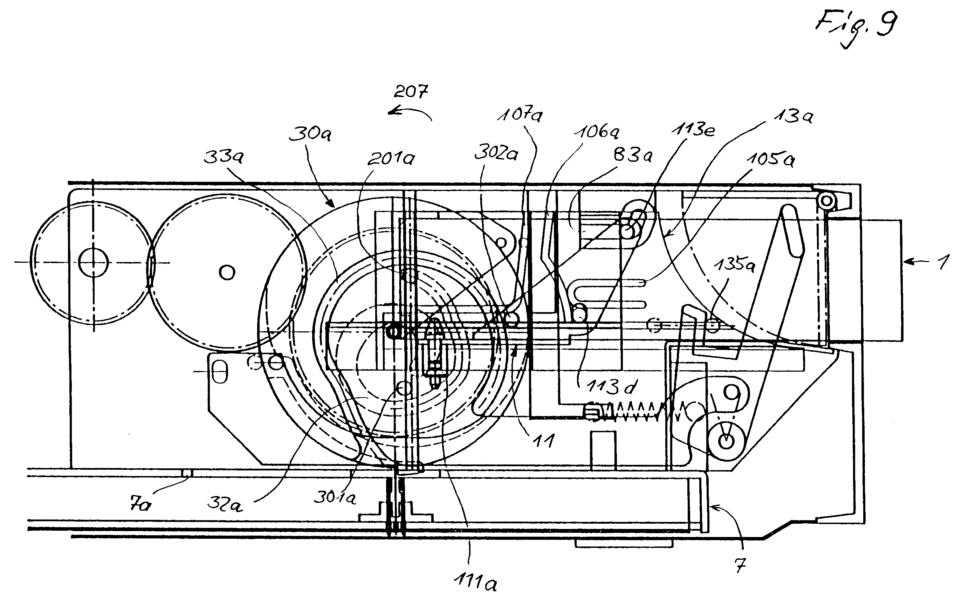

Die Steuerscheiben 30a; 30b, von denen die rechtsseitige 30a detailliert dargestellt ist (Fig. 8 - Fig. 12 und Fig. 14), werden über je ein Zahnradgetriebe angetrieben. Beide Zahnradgetriebe, von denen das rechtsseitige durch die Zahnräder 31a, 40a, 41a, 42 gebildet wird, sind über eine Synchronisierwelle 43 miteinander verbunden. Der Antrieb der Kassetten-Aufnahmevorrichtung 10 erfolgt rechtsseitig mit einem nicht dargestellten Motor über eine ebenfalls nicht dargestellte Spindel, die mit dem Zahnrad 42 in Eingriff ist. Die Kraftübertragung zum Antrieb der linken Seite der Kassetten-Aufnahmevorrichtung 10 erfolgt über die Synchronisierwelle 43. Die Achsen der Zahnräder beider Getriebe sind in seitlichen, zum Chassis 7 senkrechten Wandungen 81a; 81b des Führungsrahmens 8 angeordnet. Jeweils eine Steuerscheibe 30a; 30b und ein entsprechendes Zahnrad 31a; 31b sowie die Zahnräder 41a und 42 am rechtsseitigen Ende der Synchronisierwelle 43 besitzen eine gemeinsame Achse und sowohl die beiden Zahnräder 41a, 42 als auch die beiden Steuerscheiben 30a; 30b mit den Zahnrädern 31a; 31b sind vorzugsweise in einem Stück gefertigt.

Die Kassetten-Aufnahmevorrichtung 10 besteht aus einem ersten Schwenkhebel 11, einem zweiten Schwenkhebel 12 und synchron bewegbaren Schiebern 13a; 13b, die mit je einer an der jeweiligen Hebevorrichtung 20a; 20b ausgebildeten schienenförmigen Führung 21a; 21b in Eingriff sind.

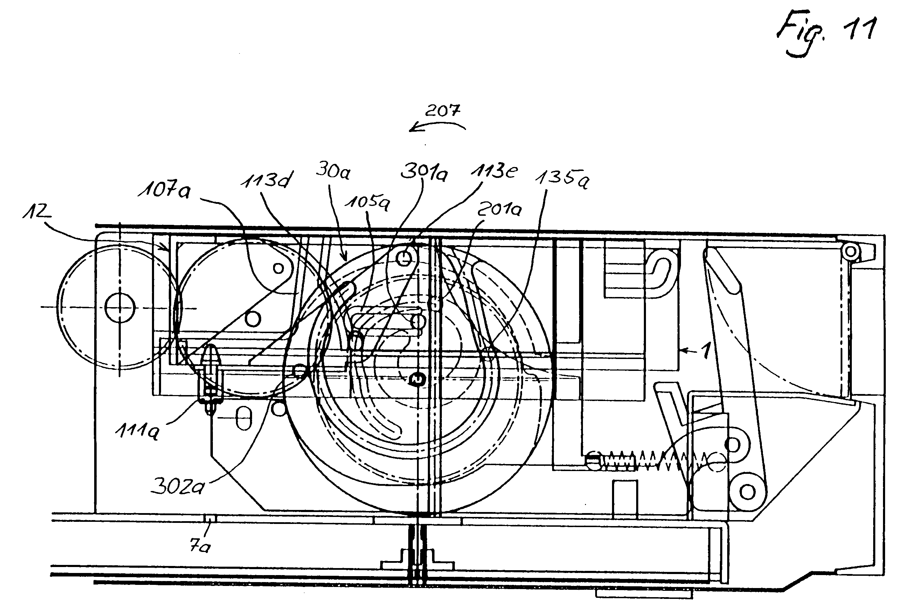

Der erste Schwenkhebel 11, der in Fig. 4 dargestellt ist, weist Ausnehmungen sowie zwei lappenförmige Fortsätze auf, an denen je ein Posisionierungsstift 111a, 111b angeordnet ist. Die Anordnung der Stifte 111a; 111b ist durch die Lage der Fangöffnungen 6e; 6f der Kassette 1 vorgegeben. Ebenso durch die Kassette 1 vorgegeben sind die Ausnehmungen sowie eine Öffnung 112 im ersten Hebel 11. Die Öffnung 112 ist für die an sich bekannte Kassettenfach-Leuchtdiode vorgesehen, mit der, in Verbindung mit den bekannten Bandsensoren, der Bandtransport überwacht werden kann. Der obere Teil der Positionierungsstifte 111a; 111b ist zum Eingriff in die jweilige Fangöffnung 6e; 6f vorgesehen, während der untere Teil dieser Stifte 111a; 111b, zur Positionierung und Arretierung der Kassette 1 auf dem Chassis 7 durch entsprechend angeordnete Zentrieröffnungen 7a; 7b vorgesehen ist. Hinsichtlich der Stellung der Kassetten-Aufnahmevorrichtung 10 während des Lade- bzw. Entladevorganges entsprechen Fig. 2 und Fig. 3 derjenigen, die in Fig. 11 dargestellt ist. In dieser Stellung sind die Positionierungsstifte 111a; 111b bereits in die Fangöffnungen 6e; 6f eingeschwenkt. Fig. 8 - Fig. 12 zeigen einzelne Phasen der Bewegung der Kassetten-Aufnahmevorrichtung 10 in der Kassetten-Ladevorrichtung während des Lade- bzw. Entladevorganges.

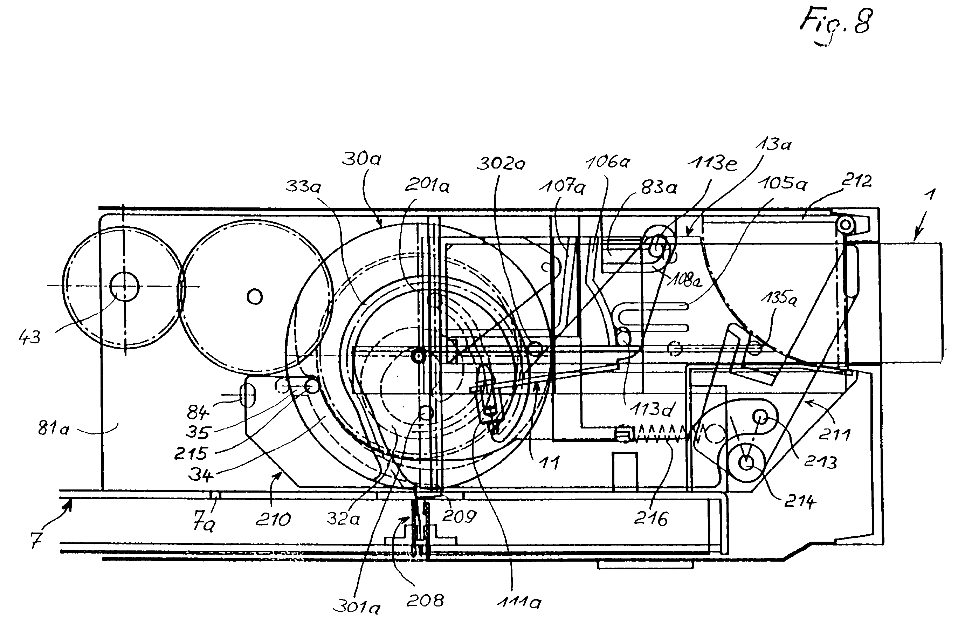

Ferner weist der erste Schwenkhebel 11 an beiden Seiten einen rechtwinklig abgebogenen Hebelfortsatz 113a; 113b auf. An den Hebelfortsätzen 113a; 113b sind jeweils zwei Zapfen 113d, 113e; 113f, 113g angeordnet, von denen die Zapfen 113d; 113f mit einer als Langloch ausgebildeten Führung in Schiebern 13a; 13b in Eingriff sind. Die anderen Zapfen 113e; 113g fassen in eine rechtwinklige Ausbuchtung am oberen Ende des jeweiligen Schiebers 13a; 13b. Der rechtsseitige Schieber 13a ist in Fig. 7 dargestellt. Er enthält die als Langloch ausgebildete Führung 131a für den Zapfen 113d und die erwähnte rechtwinklige Ausbuchtung 133a für den Zapfen 113e sowie eine weitere als Langloch ausgebildete Führung 132a für einen weiteren Zapfen 121c, der gemäß Fig. 5 an einem rechtwinklig abgebogenen Hebelfortsatz 121a eines zweiten Schwenkhebels 12 angeordnet ist.

Dieser Schwenkhebel 12 hat die Form einer Bandschutzklappe 3. Mit ihm werden Einsteck- bzw. Auswurfkraft über die Kassette 1 auf die Kassetten-Aufnahmevorrichtung 10 bzw. von der Kassetten-Aufnahmevorrichtung 10 auf die Kassette 1 übertragen. Beim Absenken der Kassette 1 in ihre Betriebsstellung werden mittels einer nicht dargestellten, ortsfesten, blockartigen Vorrichtung der zweite Schwenkhebel 12 und die Bandschutzklappe 3 gemeinsam aufgeschwenkt. Ein an dieser Vorrichtung angeordneter, nicht dargestellter, rampenartig ausgebildeter Arm dient zum Betätigen eines Entriegelungshebels 134 (Fig.7), der im rechtsseitigen Schieber 13a auf einer Achse 140 verschwenkbar angeordnet ist und mit dem die Bandschutzklappe 3 entriegel- bzw. verriegelbar ist.

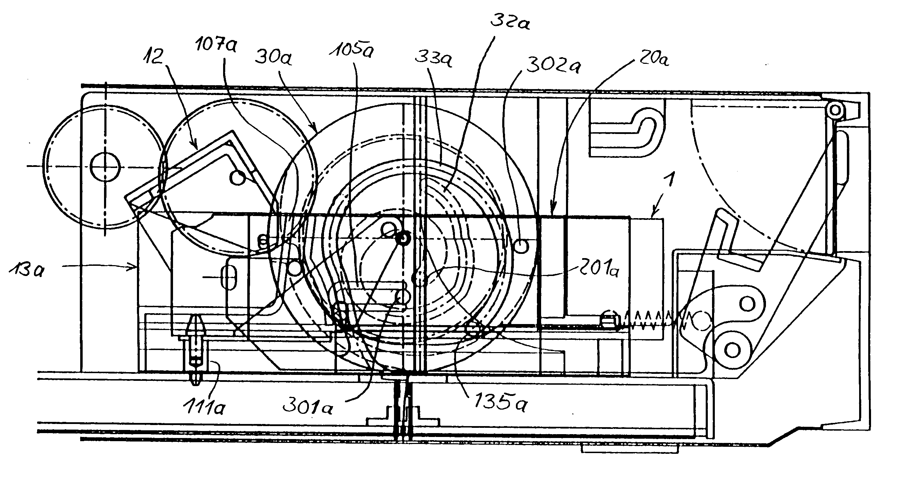

Ferner weist die in Fig. 3 dargestellte Kassetten-Aufnahmevorrichtung 10 an beiden Seiten ein Höhenführungselement für die Kassette 1 auf, von denen in Fig. 2 und Fig. 7 das rechtsseitige Höhenführungselement 100a dargestellt ist. Beide Höhenführungselemente sind an den Schiebern 13a; 13b angeordnet. Sie bilden zugleich ein Gegenlager für die Kassette 1, wenn die Bandschutzklappe 3 und der zweite Schwenkhebel 12 aufgeschwenkt werden. Beide Höhenführungselemente sind als doppelseitige Blattfedern ausgebildet, wobei beide Federenden vorzugsweise vorgespannt sind und auf dem jeweiligen Schieber 13a; 13b aufliegen. Beim Einstecken einer Kassette 1 in die Kassetten-Aufnahmevorrichtung 10 und dem nachfolgenden Kassetteneinzugsowie beim Kassettenauswurfvorgang besteht ein geringfügiges Spiel zwischen den Blattfederenden und der oberen Kassetten-Gehäusewand 2a. Ein eingangs erwähnter Reibschluß zum Halten der Kassette 1 ist nicht erforderlich, da die Kassette 1 mittels der auf dem ersten Schwenkhebel 11 angeordneten Positionierungsstifte llla, lllb bereits während des Lade- bzw. Entladevorganges arretiert wird. Bei Erreichen der Betriebsstellung (gemäß Fig. 12) gelangt, durch die Lagerung der Zapfen 113d, 113f; 121c,121d des ersten und zweiten Schwenkhebels 11; 12 in den als Langloch ausgebildeten, zum Chassis 7 senkrechten Führungen in den Schiebern 13a; 13b, die Kassette 1 mit ihrer oberen Gehäusewand 2a mit den Blattfederenden beider Höhenführungselemente in Eingriff. Dabei werden die Blattfederenden von den Schiebern 13a, 13b abgehoben und halten die Kassette 1 auf dem Chassis 7.

Die Schwenksteuerung des ersten Schwenkhebels 11 erfolgt mittels zweier, an den Seitenwandungen 81a; 81b angeordneter Führungselemente 82a; 82b, die in Fig. 4 dargestellt sind und eine Steuernut aufweisen, mit der der jeweilige Zapfen 113e; 113g in der Lade- bzw. Entladestellung in Eingriff ist. Den Verlauf der Steuernut 83a des rechtsseitigen Führungselementes 82a zeigt Fig. 4. Durch den Verlauf der Steuernut ist der erste Schwenkhebel 11 in eine erste Stellung schwenkbar, in der die Positionierungsstifte llla, lllb die Kassette 1 freigeben, so daß, wie in Fig. 8 dargestellt, die Kassette 1 entnommen bzw. vollständig in die Kassettenaufnahmevorrichtung 10 eingeführt werden kann, und in eine zweite Stellung schwenkbar, in der die Positionierungsstifte 111a; 111b mit den Fangöffnungen 6e; 6f der Kassette 1 in Eingriff gelangen. Die Zapfen 113d; 113f des ersten Schwenkhebels 11, die mit den als Langloch ausgebildeten Führungen der Schieber 13a; 13b in Eingriff sind, bilden dabei die Schwenkachse.

Durch den Verlauf der Steuernut der Führungselemente 82a; 82b und durch den ersten Schwenkhebel 11 wird außerdem ein Schutz für die Kassetten-Aufnahmevorrichtung 10 und die Kassette 1 bei falsch eingeführter Kassette 1 gewährleistet. Anderenfalls würden die Positionierungsstifte 111a, 111b auf eine Gehäusewand der Kassette 1 stoßen. Der erste Schwenkhebel 11 kann bei falsch eingelegter Kassette 1 nicht die erforderliche Schwenkbewegung ausführen, durch die, wie in Fig. 8 - Fig. 10 dargestellt, die Zapfen 113e; 113g aus den Führungselementen 82a; 82b herausbewegt werden.

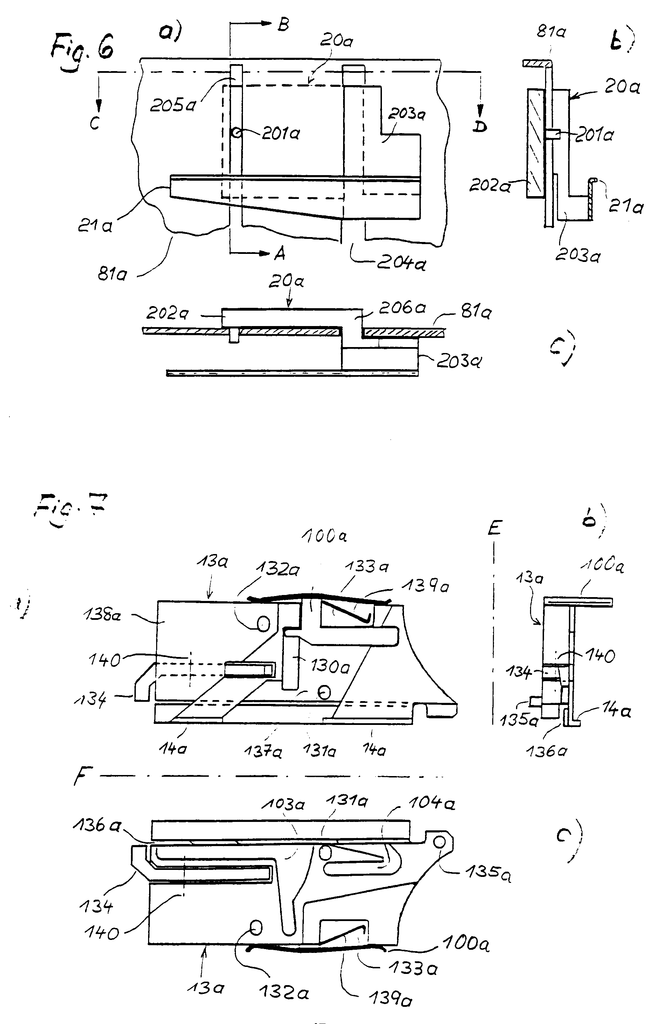

Die Hebevorrichtung 20a ist in Fig. 6 in drei Seitenansichten a) - c) dargestellt.

Ansicht a) zeigt die rechtsseitige Hebevorrichtung 20a in Blickrichtung auf die Innenseite der rechtsseitigen Wandung 81a. Ansicht b) stellt eine Schnittansicht entlang der Schnittlinie AB dar und Ansicht c) zeigt einen Schnitt entlang der Schnittlinie CD.

Die Hebevorrichtung 20a weist ein äußeres, blockartiges Gleitelement 202a sowie ein inneres, blockartiges Gleitelement 203a auf. In der Wandung 81a sind senkrecht zum Chassis 7 eine erste und zweite Führung 204a; 205a ausgebildet. Mit der ersten Führung 204a ist ein Steg 206a in Eingriff, durch den das innere Gleitelement 203a mit dem äußeren Gleitelement 202a verbunden ist. In der zweiten Führung 205a wird der am äußeren Gleitelement 202a ausgebildete Zapfen 201a geführt. Der Zapfen 201a ist mit einer bereits erwähnten ersten spiralförmigen Führungsnut 32a der Steuerscheibe 30a, die in Fig. 8 - Fig. 12 und Fig. 14 dargestellt ist, in Eingriff. An dem inneren Gleitelement 203a ist gemäß Ansicht b) in Fig. 6 die schienenförmige Führung 21a für den Schieber 13a angeordnet.

Fig. 7 zeigt den rechtsseitigen Schieber 13a in drei Seitenansichten.

Die Ansicht a) zeigt die der Kassette 1 zugewandte Seite. In Ansicht b) ist der Schieber 13a um 90° um eine Achse E geschwenkt dargestellt und in Ansicht c) um 180° um eine Achse F geschwenkt.

Die der Kassette 1 zugewandte Seite des Schiebers 13a enthält eine erste Ausnehmung 137a für den ersten Schwenkhebel 11, eine zweite Ausnehmung 138a für den zweiten Schwenkhebel 12 sowie eine innerhalb der ersten Ausnehmung 137a gelegene dritte Ausnehmung 130a für die Anordnung des Höhenführungselements 100a und für einen in den senkrechten Teil der Ausnehmung 130a ragenden Begrenzungssteg 114a am rechtsseitigen Fortsatz 113a des ersten Schwenkhebels 11. In die Ausbuchtung 133a, in die der Zapfen 113e des ersten Schwenkhebels 11 eingreift, reicht ein gestrecktes Federelement 139a hinein. Mit diesem und dem entsprechenden auf der linken Seite der Kassettenaufnahmevorrichtung 10 wird ein Herausschwenken der Positionierungszapfen 111a; 111b aus den Fanglöchern 6e; 6f der Kassette 1 verhindert.

Wie in Fig. 7 dargestellt, weist die der Kassette 1 zugewendete Seite außerdem zwei in Reihe angeordnete Führungsstege 14a für die Kassette 1 auf, die als Kassettenauflage dienen.

Ansicht c) der Fig. 7 zeigt die Seite des Schiebers 13a, die der Steuerscheibe 30a zugewandt ist. Diese Seite weist für den ersten 301a und den zweiten 302a Antriebszapfen der Steuerscheibe 30a Führungen auf, die von Randbegrenzungen zweier Ausnehmungen 103a; 104a gebildet werden. Mittels dieser Führungen wird, wie in Fig. 8 - Fig. 12 dargestellt, die Kassetten-Aufnahmevorrichtung 10 angetrieben. Ferner weist diese Seite den Zapfen 135a sowie eine durchgehende Führung 136a auf, die komplementär zu der schienenförmigen Führung 21a der Hebevorrichtung 20a ist.

Fig. 8 - Fig. 12 zeigen die in Fig. 7 von Ausnehmungen 103a, 104a gebildeten Führungen sowie die Steuernut 83a in abgewandelter Form als erhaben ausgebildete Stege 105a; 106a, 107a; 108a. Hierbei handelt es sich lediglich um eine andere Fertigungausführung der Schieber 13a, 13b und der ortsfesten, der Schwenksteuerung des ersten Schwenkhebels 11 dienenden Führungselemente 82a, 82b.

Die Figuren 8 - 12, denen Konstruktionszeichnungen zugrunde liegen, stellen einzelne Phasen der Bewegung der Kassetten-Aufnahmevorrichtung 10 dar. Sie zeigen die rechte Seite der Kassetten-Ladeeinrichtung in vergrößertem Maßstab.

Fig. 8 zeigt die Kassetten-Aufnahmevorrichtung 10 in Lade- bzw. Entladestellung mit der Kassette 1. In dieser Stellung ist der Zapfen 113e des ersten Schwenkhebels 11 mit dem schräg nach oben verlaufenden Endstück der ortsfesten Steuernut 83a in Eingriff. Entsprechendes gilt für die linke Seite der Annordnung. Durch das schräg nach oben verlaufende Endstück der Steuernut 83a und der entsprechenden Steuernut im linksseitigen Führungselement 82b ist der erste Schwenkhebel 11 um die Drehachse der rechts-und linksseitigen Zapfen 113d; 113f von der Kassette 1 weggeschwenkt, so daß die Positionierungsstifte 111a; 111b nicht im Eingriff mit den Fangöffnungen 6e; 6f der Kassette 1 sind.

Fig. 9 zeigt den Zapfen 113e beim Eintritt in den parallel zum Chassis 7 verlaufenden Teil der Steuernut 83a. In dieser Stellung ist der erste Schwenkhebel 11 bereits um die Drehachse der rechts- und linksseitigen Zapfen 113d; 113f zur Kassette 1 hingeschwenkt, so daß die Positionierungsstifte 111a; 111b mit den Fangöffnungen 6e; 6f in Eingriff sind. Bevor jedoch der Zapfen 113e in den parallel zum Chassis 7 verlaufenden Teil der Steuernut 83a eintritt, wird der Motorantrieb der Kassetten-Aufnahmevorrichtung 10 aktiviert. Mit dem Eintritt des Zapfens 113e in den parallel zum Chassis 7 verlaufenden Teil der Steuernut 83a gelangen der auf der Steuerscheibe 30a angeordnete zweite Antriebszapfen 302a mit dem Steg 107a und der auf der linksseitigen Steuerscheibe 30b angeordnete zweite Antriebszapfen 302b mit dem entprechenden linksseitigen Steg in Eingriff. Die Ladedrehrichtung der Steuerscheiben 30a; 30b ist durch einen Pfeil 207 angedeutet.

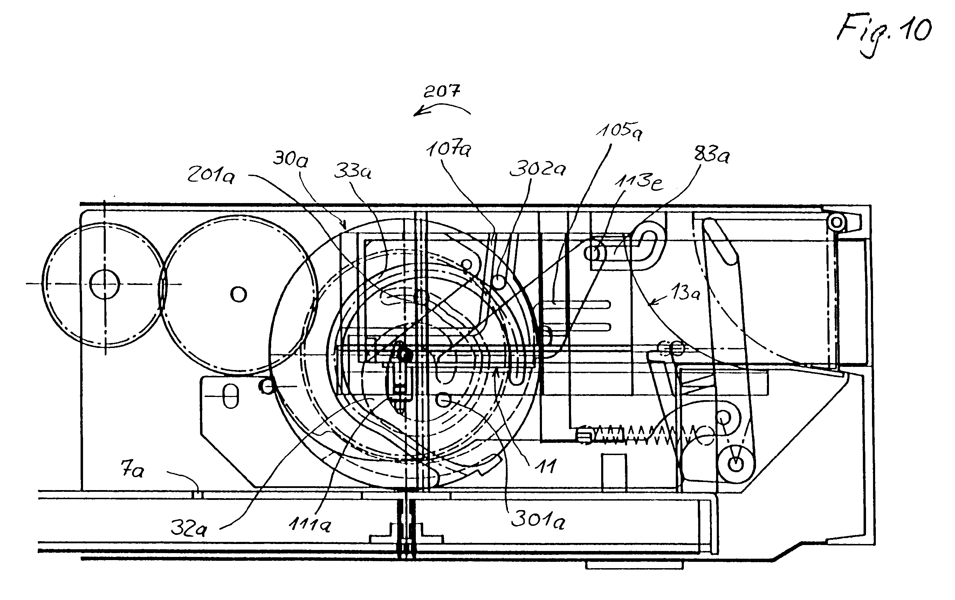

Wie in Fig. 10 dargestellt, wird mit den zweiten Antriebszapfen 302a, 302b die Kassetten-Aufnahmevorrichtung 10 soweit angetrieben, daß sie in eine Stellung gelangt, die sich über der Betriebsstellung befindet. Beim Erreichen dieser Stellung verläßt, wie Fig. 11 zeigt, der zweite Antriebszapfen 302a den Steg 107a und damit auch der linksseitige zweite Antriebszapfen 302b den entsprechenden linksseitigen Steg. Gleichzeitig gelangen der auf der Steuerscheibe 30a angeordnete erste Zapfen 301a mit dem Steg 105a und der auf der linkseitigen Steuerscheibe 30b angeordnete erste Zapfen 301b mit dem entsprechenden linksseitigen Steg in Eingriff und übernehmen damit den weiteren Antrieb der Kassetten-Aufnahmevorrichtung 10 in die Betriebsstellung gemäß Fig. 12.

Fig. 12 stellt die Betriebsstellung der Kassette 1 dar. Das in Fig. 11 dargestellte Anheben der Kassetten-Aufnahmevorrichtung 10 wird durch die erste spiralförmige Führungsnut 32a im Steuerrad 30a und die entsprechende linksseitige erste spiralförmige Führungsnut im linksseitigen Steuerrad 30b bewirkt, mit denen die Zapfen 201a; 201b der Hebevorrichtungen 20a; 20b in Eingriff sind.

Bevor jedoch der zweite Antriebszapfen 302a den Steg 107a und der linksseitige zweite Antriebszapfen 302b den entsprechenden linksseitigen Steg verlassen, gelangen der am Schieber 13a vorgesehene Zapfen 135a mit einer zweiten spiralformigen Führungsnut 33a in der Steuerscheibe 30a und der am linksseitigen Schieber 13b vorgesehene Zapfen 135b mit der entsprechenden zweiten spiralförmigen Führungsnut in der linksseitigen Steuerscheibe 30b in Eingriff und übernehmen damit die Führung der Kassetten-Aufnahmevorrichtung 10 während des Absenkens in die Stellung gemäß Fig. 12.

Die beschriebenen Vorgänge werden auf beiden Seiten mit der Synchronisierungswelle 43 synchronisiert.

Der Verlauf der in den Steuerscheiben 30a; 30b ausgebildeten spiralförmigen Führungsnuten und der stegartigen Führungen an den Schiebern 13a; 13b sowie deren Zuordnung zueinander bestimmen den Geschwindigkeitsverlauf der Antriebsgeschwindigkeit der Kassetten-Aufnahmevorrichtung 10. Da die Kassette 1 während des gesamten Lade- bzw. Entladevorgangs arretiert ist, kann die mittlere Lade- bzw. Entladegeschwindigkeit erhöht werden, wodurch Lade- und Entladevorgang wesentlich verkürzt werden.

Die Lade- bzw. Entladestellung sowie die Betriebsstellung der Kassettenaufnahmevorrichtung 10 wird mit einem ortsfesten Sensor 208 detektiert. Als Sensor 208 dient ein Schaltelement, das von einer am Umfang der rechtsseitigen Steuerscheibe 30a angeordneten Nocke 209 betätigt wird und dabei ein der Lade- oder der Betriebsstellung entsprechendes Signal abgibt. Dieses Signal wird einem Auswerteeingang einer nichtdargestellten elektronischen Steuerschaltung zugeführt, mit der die Ablaufsteuerung der Laufwerkmechanik und der Kassetten-Ladevorrichtung sowie die Überwachung des Bandantriebes durchgeführt werden.

Die Aktivierung des Motorantriebes der Kassetten-Aufnahmevorrichtung 10 erfolgt mit einem der beiden nichtdargestellten Bandendsensoren durch Abschattung des einen Bandendsensors von der erwähnten Kassettenfach-Leuchtdiode. Die Bandendsensoren sind am Chassis 7 rechts bzw. links der Wandung 81a; 81b in bekannter Weise angeordnet und jeweils mit einem Auswerteeingang der elektronischen Steuerschaltung verbunden. In dem Ausführungsbespiel wird dazu der rechtsseitige Bandendsensor verwendet. Die vorgenannte Abschattung erfolgt durch einen Blendenschieber 210. Der Blendenschieber 210 ist an der rechtsseitigen Wandung 81a horizontal beweglich angeordnet und durch einen Verbindungszapfen 213 mit einem rechtsseitigen Hebel 211 drehbar verbunden, der zusammen mit dem entsprechenden linksseitigen Hebel einen Anschlag beim Verschließen des Kassettenfaches durch eine an sich bekannte Kassettenfach-Klappe 212 bildet. Beide Hebel sind durch eine in den Wandungen 81a, 81b gelagerte Welle 214 miteinander verbunden. Beide Hebel sind ferner in den Stellungen gemäß Fig. 8 - Fig. 10 unter Einwirkung eines an Blendenschieber 210 und rechtsseitiger Wandung 81a angreifenden Kraftspeichers 216 mit den an den Schiebern 13a; 13b angeordneten Zapfen 135a; 135b in Eingriff, so daß am Beginn des Ladevorganges die beiden Hebel und damit auch der Blendenschieber 210 durch die Kassetten-Aufnahmevorrichtung 10 betätigt werden können.

Damit der Bandantrieb überwacht werden kann, weisen der rechtsseitige Schieber 13a und die rechtsseitige Wandung 81a jeweils ein entsprechend angeordnetes Loch auf. Die Figuren 8 - 12 zeigen das Loch 84 der Wandung 81a.

In der Lade- bzw. Endladestellung ist der Antrieb der Kassetten-Aufnahmevorrichtung 10 durch den Antriebsmotor noch nicht aktiviert, da in dieser Stellung der Blendenschieber 210 das Loch 84 noch nicht vollständig verschließt und damit den Bandendsensor nicht abschatten kann. Die Deaktivierung des Antriebes am Ende des Lade- und vorzugsweise auch am Ende des Entladevorganges, erfolgt mittels des Lade- bzw. Entlade- und Betriebsstellung der Kassetten-Aufnahmevorrichtung 10 detektierenden Sensors 208.

An dem dem Hebel 211 entgegengesetzten Ende des Blendenschiebers 210 ist ein Zapfen 215 angeordnet, der zum Eingriff mit einer bogenartig verlaufenden dritten Führungsnut 34 an der rechtsseitigen Steuerscheibe 30a vorgesehen ist, wobei der Kraftspeicher 216 bewirkt, daß der Zapfen 215 des Blendenschieber 210 mit der dritten Führungsnut 34 der Steuerscheibe 30a in Eingriff gelangen kann. Wie in Fig. 8 - Fig. 12 dargestellt, wird mit dem Zapfen 215 und dem Verlauf der dritten Führungsnut 34 der Bewegungsablauf des rechtsseitigen 211 und des entsprechenden linksseitigen Hebels in der Weise gesteuert, daß die beiden Hebel die Kassettenfach-Klappe 212 während des Lade- und des Entladevorganges entsprechend schließen und öffnen können. Der Kraftspeicher 216 bewirkt ferner auch das Auswerfen der Kassette 1, wenn, wie in Fig. 8 dargestellt, am Ende des Entladevorganges der Zapfen 215 in das stufenartige Ende 35 der dritten Führungsnut 34 gelangt. Das Auswerfen der Kassette 1 bedeutet hier, daß unter der Einwirkung des Kraftspeichers 216 die beiden dabei an den Zapfen 135a, 135a angreifenden Hebel die Kassetten-Aufnahmevorrichtung 10 in die Lade- bzw. Entladestellung bewegen. Wie außerdem anhand der Fig. 8 erkennbar ist, kann beim Einführen der Kassette 1 bis in die Lade- bzw. Entladestellung der Kraftspeicher 216 nicht auf die Kassette 1 einwirken.

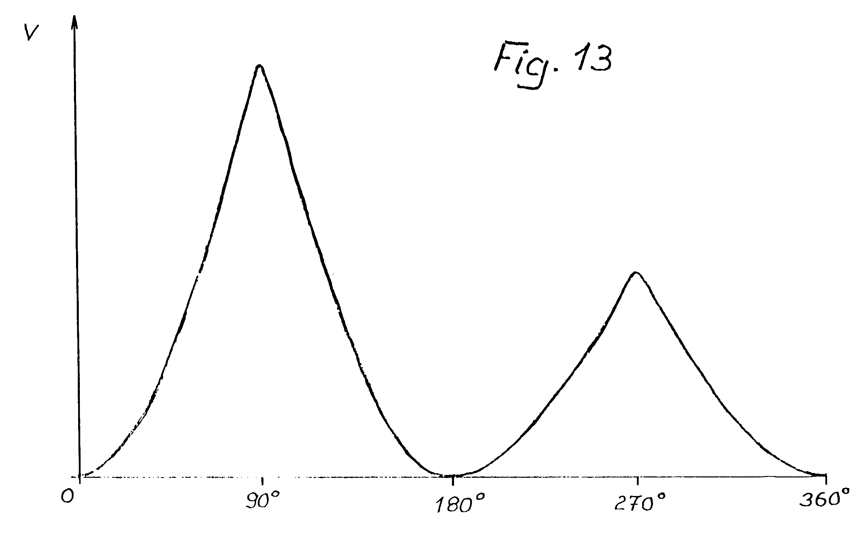

Fig. 13 zeigt den Geschwindigkeitsverlauf der Kassetten-Aufnahmevorrichtung 10 anhand eines Ablaufdiagramms.

Auf der Ordinate ist die Geschwindigkeit v aufgetragen, wobei der Koordinatennullpunkt der Geschwindigkeit Null entspricht. Auf der Abszisse ist der Lade- bzw. Entladeweg der Kassetten-Aufnahmevorrichtung 10 als Ladedrehbewegung der Steuerscheiben 30a, 30b dargestellt. Dabei entspricht der Koordinatennullpunkt der Lade- bzw. Entladestellung, der Drehwinkel von 0 bis nahezu 180° der horizontalen Bewegung der Kassetten-Aufnahmevorrichtung 10 in die Stellung gemäß Fig. 11 und der Drehwinkel von 180° bis nahezu 360° der vertikalen Bewegung in die Betriebsstellung gemäß Fig. 12. Die Drehgeschwindigkeit der Steuerscheiben 30a, 30b ist konstant.

Da die Geschwindigkeit in Nähe der Stellung gemäß Fig 11 sowie am Beginn und am Ende eines Lade- oder Entladevorganges kontinuierlich abnehmend gegen Null geht, werden trotz großer mittlerer Geschwindigkeit der Kassetten-Aufnahmevorrichtung 10 Lade-und Entladegeräusch sowie die mechanische Belastung von Kassette 10 und Gerät erheblich reduziert.

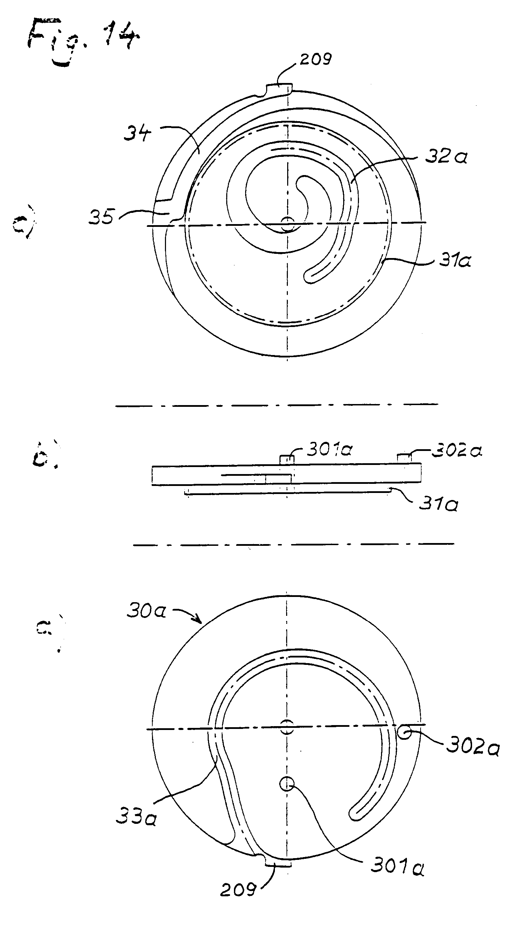

Fig. 14 zeigt die rechtsseitige Steuerscheibe 30a, an der die Nocke 209 angeordnet ist, in drei verschiedenen Seitenansichten a) - c).

Ansicht a) zeigt die dem rechtsseitigen Schieber 13a zugewandte Seite der rechtsseitigen Steuerscheibe 30a in der Drehwinkelstellung gemäß Fig. 8 mit dem ersten 301a und dem zweiten 302a Antriebszapfen und der zweiten spiralförmigen Führungsnut 33a.

In Ansicht b) ist die Steuerscheibe 30a um 90° um eine Achse G geschwenkt dargestellt. In Ansicht c) ist die Steuerscheibe 30a um 180° um eine Achse H geschwenkt dargestellt und zeigt somit die der rechtsseitigen Wandung 81a zugewandte Seite. An dieser Seite sind das Zahnrad 31a, die erste spiralförmige mit dem Zapfen 201a der Hebevorrichtung 20a in Eingriff stehende Führungsnut 32a und die bogenartig verlaufende dritte Führungsnut 35a angeordnet.

## Patentansprüche

1. Kassetten-Ladevorrichtung für ein Kassettengerät zur Informationsaufzeichnung und/oder Wiedergabe mit einem auf einem Kassetten-Laufwerkchassis (7) ortsfest angeordneten Führungsrahmen (8), mit einer Kassetten-Aufnahmevorrichtung (10), die zwischen einer Ladestellung, in der eine Kassette (1) in die Kassetten-Aufnahmevorrichtung (10) eingeführt und aus dieser entnommen werden kann, und einer Betriebsstellung bewegbar ist, in der die Informationsaufzeichnung bzw. wiedergabe erfolgt, wobei die Kassette (1) auf dem Laufwerkchassis (7) mittels Positionierungsstiften (111a; 111b) und am Kassettengehäuse ausgebildeten Fangöffnungen (6e; 6f) positioniert ist, mit die Fangöffnungen (6e; 6f) nutzenden Mitteln sowohl zur Arretierung der Kassette (1) während ihres Transportes zwischen der Lade- und der Betriebsstellung als auch zu ihrer Zentrierung in der Betriebsstellung und mit Mitteln zum Antrieb und Steuerung der Kassetten-Aufnahmevorrichtung (10) zwischen der Lade- und der Betriebsstellung, **dadurch gekennzeichnet**, daß anstelle einer festen Anordnung auf dem Laufwerkchassis (7) die Positionierungsstifte (111a; 111b) auf einem an der Kassetten-Aufnahmevorrichtung (10) schwenkbar angeordneten ersten Schwenkhebel (11) fest angeordnet sind, der in eine erste Stellung schwenkbar ist, in der die Positionierungsstifte (111a; 111b) die Kassette (1) freigeben, so daß die Kassette (1) in die Kasssetten-Aufnahmevorrichtung 10 eingeführt und aus dieser entnommen werden kann, und in eine zweite Stellung schwenkbar ist, in der die Positionierungsstifte (111a; 111b) mit den Fangöffnungen (6e; 6f) der Kassette (1) in Eingriff gelangen, wobei das Schwenken des ersten Schwenkhebels (11) von der ersten Stellung in die zweite Stellung und umgekehrt bei der Ladestellung der Kassetten-Aufnahmevorrichtung (10) erfolgt, daß die Kassette (1) während ihres Lade- oder Entladevorganges durch die mit ihren Fangöffnungen (6e; 6f) im Eingriff stehenden Positionierungsstiften (111a; 111b) in der Kassetten-Aufnahrnevorrichtung (10) arretiert ist und daß bei Erreichen der Betriebsstellung die Positionierungsstifte (111a; 111b) mit ihrem unteren Ende jeweils mit im Laufwerkchassis (7) entsprechend angeordneten Zentrieröffnungen (7a; 7b) in Eingriff gelangen.

2. Kassetten-Ladevorrichtung nach Anspruch 1, **dadurch gekennzeichnet,** daß das Schwenken des ersten Schwenkhebels (11) von der ersten Stellung in die zweite Stellung und umgekehrt durch die Führung von zwei am Schwenkhebel (11) angeordneten Zapfen (113e; 113g) in je einer Steuernut zweier Führungselemente (82a; 82b) bewirkt wird, die rechts- und linksseitig an einer senkrechten Wandung (81a; 81b) des Führungsrahmens (8) ortsfest angeordnet sind.

3. Kassetten-Ladevorrichtung nach Anspruch 2, **dadurch gekennzeichnet**, daß durch den Verlauf der Steuernut der Führungselemente (82a, 82b) und durch den ersten Schwenkhebel (11) außerdem ein Schutz für die Kassetten-Aufnahmevorrichtung (10) und die Kassette (1) bei falsch eingeführter Kassette 1 gewährleistet ist.

4. Kassetten-Ladevorrichtung nach Anspruch 1, **dadurch gekennzeichnet,** daß an der rechten und linken Seite der Ladevorrichtung je eine einen ersten (301a; 301b) und zweiten (302a; 302b) Antriebszapfen aufweisende Steuerscheibe (30a; 30b) vorgesehen ist und daß die Steuerscheiben (30a; 30b) synchron antreibbar sind, wobei mit den ersten (301a; 301b) und zweiten (302a; 302b), im wesentlichen nacheinander in entsprechende Führungen der Kassetten-Aufnahmevorrichtung (10) eingreifenden Antriebzapfen die Kassetten-Aufnahmevorrichtung (10) antreibbar ist und wobei die horizontale und die senkrechte Bewegung der Kassetten-Aufnahmevorrichtung (10) zwischen der Lade- und der Betriebsstellung mit Hilfe weiterer Zapfen (201a, 135a; 201b, 135b) und weiterer Führungen steuerbar ist.

5. Kassetten-Ladevorrichtung nach Anspruch 4, **dadurch gekennzeichnet**, daß an jeder Steuerscheibe (30a; 30b) an der der Kassetten-Aufnahmevorrichtung (10) abgewandten Seite eine erste spiralfömige Führungsnut (32a; 32b) angeordnet ist, die mit dem an einer senkrecht bewegbaren Hebevorrichtung (20a; 20b) der Ladevorrichtung angeordneten Zapfen (201a; 201b) in Eingriff ist und daß an jeder Steuerscheibe (30a; 30b) an der Kassetten-Aufnahmevorrichtung (10) zugewandten Seite eine zweite spiralfömige Führungsnut (31a; 31b) angeordnet ist, die zum Eingriff mit dem an der Kassetten-Aufnahmevorrichtung (10) angeordneten Zapfen (135a; 135b) vorgesehen ist.

6. Kassetten-Ladevorrichtung nach Anspruch 5, **dadurch gekennzeichnet**, daß als Höhenführungselement der Kassette (1) an der linken und an der rechten Seite der Kassetten-Aufnahmevorrichtung (10) eine vorgespannte Blattfeder vorgesehen ist, daß die Höhenführungselemente in der Ladestellung der Kassetten-Aufnahmevorrichtung (10) ein geringfügiges Spiel zu der oberen Gehäusewand (2a) der Kassette (1) besitzen, daß die Höhenführungselemente ein Gegenlager für die Kassette (1) bilden, wenn ihre Bandschutzklappe 3 zusammen mit einem zweiten Schwenkhebel (12), durch den Einsteck- und Auswerfkraft von der Kassette (1) auf die Kassetten-Aufnahmevorrichtung (10) bzw. umgekehrt übertragen werden, aufgeschwenkt werden, und daß in der Betriebsstellung die Höhenführungselemente mit der oberen Gehäusewand (2a) der Kassette (1) in Eingriff sind.

7. Kassetten-Ladevorrichtung nach einem der Ansprüche 4 - 6, **dadurch gekennzeichnet**, daß an der rechtsseitigen Steuerscheibe (30a) an der der Kassetten-Aufnahmevorrichtung (10) abgewandten Seite eine dritte spiralfömige Führungsnut (34) angeordnet ist, die zur Steuerung einer Kassettenfach-Klappe (212) sowie zur Steuerung eines Blendenschiebers (210) vorgesehen ist, der an der rechtsseitigen Wandung (81a) horizontal bewegbar angeordnet ist und mit dem bei der Ladestellung der Kassetten-Aufnahmevorrichtung (10) ein der Überwachung des Bandantriebes dienender Bandendsensor abgeschattet werden kann, und daß durch die Abschattung dieses Bandendsensors bei der Ladestellung der Kassetten-Aufnahmevorrichtung (10) der Motorantrieb der Kassetten-Aufnahmevorrichtung (10) für den Ladevorgang aktivierbar ist.

8. Kassetten-Ladevorrichtung nach Anspruch 7, **dadurch gekennzeichnet**, daß durch Einwirkung eines Kraftspeichers (216) ein am Blendenschieber (210) angeordneter, zum Eingriff mit der dritten Führungsnut (34) vorgesehener Zapfen (215) stets mit der rechtsseitigen Steuerscheibe (30a) in Eingriff ist.

9. Kassetten-Ladevorrichtung nach Anspruch 7 oder 8, **dadurch gekennzeichnet**, daß der Blendenschieber (210) mit einem rechtsseitigen schwenkbaren Hebel (211) drehbar verbunden ist, der zusammen mit einem entsprechenden linksseitigen Hebel einen Anschlag für die Kassettenfach-Klappe (212) beim Verschließen des Kassettenfaches bildet.

10. Kassetten-Ladevorrichtung nach Anspruch 9, **dadurch gekennzeichnet**, daß bei einem Entladevorgang vor dem Erreichen der Ladestellung der Kassetten-Aufnahmevorrichtung (10) der Hebel (211) und der entsprechende linksseitige Hebel mit den Zapfen (135a, 135b) der Kassetten-Aufnahmevorrichtung (10) in Eingriff gelangt.

11. Kassetten-Ladevorrichtung nach Anspruch 9 oder 10, **dadurch gekennzeichnet**, daß am Ende des Entladevorganges der Kassetten-Aufnahmevorrichtung (10) durch die Einwirkung des Kraftspeichers (216) über den Blendenschieber (210) auf den Hebel (211) und den entsprechenden linksseitigen Hebel die Kassette (1) auswerfbar ist.

## Claims

1. Cassette loading arrangement for a cassette apparatus for the recording and/or reproduction of information, having a guide frame (8) arranged on a cassette drive chassis (7) in a fixed position, having a cassette receiving device (10) which can be moved between a loading position, in which a cassette (1) can be introduced into the cassette receiving device (10) and removed therefrom, and, an operating position, in which the recording or reproduction of information is carried out, wherein the cassette (1) is positioned on the drive chassis (7) by means of positioning pins (111a; 111b) and catch apertures (6e; 6f) formed on the cassette housing, having means using the catch apertures (6e; 6f) for locking the cassette (1) during its transportation between the loading and the operating position and also for centring it in the operating position, and having means for driving and controlling the cassette receiving device (10) between the loading and the operating positions, **characterized in that**, instead of a fixed arrangement on the drive chassis (7), the positioning pins (111a; 111b) are fixed on a first pivoted lever (11) which is pivotally mounted on the cassette receiving device (1) and which can be pivoted into a first position, in which the positioning pins (111a; 111b) release the cassette (1) so that the cassette (1) can be introduced into the cassette receiving device (10) and removed therefrom, and can be pivoted into a second position, in which the positioning pins (111a; 111b) engage with the catch apertures (6e; 6f) of the cassette (1), whereby the pivoting of the first pivoted lever (11) from the first position into the second position and vice versa is carried out at the loading position of the cassette receiving device (10), that the cassette (1) is locked in the cassette receiving device (10) during its loading or unloading process by the positioning pins (111a; 111b) engaging with its catch apertures (6e; 6f), and that upon reaching the operating position, the lower ends of the positioning pins (111a; 111b) each engage with correspondingly arranged centring apertures (7a; 7b) in the drive chassis (7).

2. Cassette loading arrangement according to claim 1, **characterized in that** the swivelling of the first pivoted lever (11) from the first position to the second position and vice versa is effected through the guiding of each of two pegs (113e; 113g) mounted on the pivoted lever (11) in a control groove of two guiding elements (82a; 82b) which are disposed in a fixed position to the left and right on a vertical wall (81a; 81b) of the guide frame (8).

3. Cassette loading arrangement according to claim 2, **characterized in that** in addition protection for the cassette receiving device (10) and the cassette (1) in the case of an incorrectly inserted cassette 1 is guaranteed by the shape of the control groove of the guiding elements (82a; 82b) and by the first pivoted lever (11).

4. Cassette loading arrangement according to claim 1, **characterized in that** control disks (30a; 30b), each having a first (301a; 301b) and second (302a; 302b) drive spigot, are provided to the left and right of the loading arrangement, and that the control disks (30a; 30b) can be driven in synchronism whereby the cassette receiving device (10) can be driven with the first (301a; 301b) and second (302; 302b)drive spigots, essentially engaging successively in corresponding guides of the cassette receiving device (10), and whereby the horizontal and the vertical movement of the cassette receiving device (10) between the loading and the operating position can be controlled with the aid of further pegs (201a; 135a; 201b; 135b) and further guides.

5. Cassette loading arrangement according to claim 4, **characterized in that** a first helical guide groove (32a, 32b) is disposed on each control disk (30a; 30b) on the side facing away from the cassette receiving device (10), and said groove engages with the peg (201a; 201b) mounted on a vertically movable lifting mechanism (20a; 20b) of the loading arrangement, and that a second helical guide groove (31a; 31b) is disposed on each control disk (30a; 30b) on the side facing the cassette receiving device (10), and said groove is provided for engaging with the peg (135a; 135b) disposed on the cassette receiving device (10).

6. Cassette loading arrangement according to claim 5, **characterized in that** a pretensioned leaf spring is provided as vertical guiding element for the cassette (1) on the left and on the right side of the cassette receiving device (10), that in the loading position of the cassette receiving device (10) the vertical guiding elements have a slight play in relation to the upper housing wall (2a) of the cassette (1), that the vertical guiding elements form an end support for the cassette (1) if its tape protection flap (3) together with a second pivoted lever (12) is swung upwards by the insertion and ejection force from the cassette (1) to the cassette receiving device (10) or vice versa respectively, and that in the operating position, the vertical guiding elements are engaged with the upper housing wall (2a) of the cassette (1).

7. Cassette loading arrangement according to one of the claims 4 through 6, **characterized in that** a third helical guide groove (34) is disposed on the side of the right-hand control disk (30a) facing away from the cassette receiving device (10), and said groove is provided for controlling a cassette drawer flap (212) as well as for controlling a sliding blind (210) which is mounted on the right-hand wall (81a) such that it can be moved horizontally and with which, in the loading position of the cassette receiving device (10), a tape-end sensor serving for the monitoring of the tape drive can be shaded, and that through the shading of this tape-end sensor in the loading position of the cassette receiving device (10), the motor drive for the cassette receiving device (10) can be activated for the loading procedure.

8. Cassette loading arrangement according to claim 7, **characterized in that** a peg (215) mounted on the sliding blind (210) and provided for engaging with the third guide groove (34) is permanently engaged with the right-hand control disk (30a) through the action of an energy accumulator (216).

9. Cassette loading arrangement according to claim 7 or 8, **characterized in that** the sliding blind (210) is coupled to a right-hand swivelling lever (211) such that it can rotate, whereby said lever forms, together with a corresponding lefthand lever, a stop for the cassette drawer flap (212) upon closing the cassette drawer.

10. Cassette loading arrangement according to claim 9, **characterized in that** in an unloading procedure, prior to reaching the loading position of the cassette receiving device (10), the lever (211) and the corresponding left-hand lever engage with the pegs (135a, 135b) of the cassette receiving device (10).

11. Cassette loading arrangement according to claim 9 or 10, **characterized in that** the cassette (1) can be ejected at the end of the unloading procedure of the cassette receiving device (10) by the action of the energy accumulator (216) acting via the sliding blind (210) on the lever (211) and the corresponding lefthand lever.

## Revendications

1. Mécanisme de chargement de cassette d'un appareil d'enregistrement et/ou de reproduction d'informations, équipé:
- d'un cadre de guidage (8) fixe, monté sur le châssis du mécanisme d'entraînement (7) de la cassette, d'un tiroir de cassette (10), pouvant se déplacer de la position de chargement ou de déchargement de la cassette (1) à la position de marche dans laquelle s'effectue l'enregistrement ou la reproduction d'informations, la cassette (1) étant positionnée sur le châssis du mécanisme d'entraînement (7) au moyen de broches de positionnement (111a, 111b) et de trous de positionnement (6e, 6f) situés sur le boîtier de la cassette,
- de dispositifs utilisant les trous de positionnement (6e, 6f) aussi bien pour le blocage de la cassette (1) pendant son déplacement de la position de chargement à la position de marche, que pour le centrage lorsqu'elle est en position de marche,
- et de dispositifs pour l'entraînement et la commande du tiroir de cassette (10) entre la position de chargement et la position de marche,
caractérisé en ce que les broches de positionnement (111a, 111b), au lieu d'être disposées de façon fixe sur le châssis du mécanisme d'entraînement (7), sont disposées de façon fixe sur un levier pivotant (11) sur le tiroir de cassette (10), ce levier pouvant être pivoté dans une première position dans laquelle les broches de positionnement (111a, 111b) libèrent la cassette (1) permettant ainsi l'insertion ou le retrait de la cassette, et dans une deuxième position dans laquelle les broches de positionnement (111a, 111b) se mettent en prise avec les trous de positionnement (6e, 6f) de la cassette (1), le pivotement du premier levier (11) pour aller de la première dans la deuxième position et vice versa ayant lieu, lorsque le tiroir de cassette (10) est en position de chargement,
caractérisé également en ce que la cassette (1) est bloquée dans le tiroir (10), par le fait que les trous de positionnement (6e, 6f) sont en prise avec les axes de positionnement (111a, 111b), et que, lorsque la position de marche est atteinte, les broches de positionnement (111a, 111b) se mettent en prise, à leur extrémité inférieure, avec des trous de centrage (7a, 7b) prévus dans le châssis du mécanisme d'entraînement (7).

2. Mécanisme de chargement de cassette selon la revendication 1, caractérisé en ce que le pivotement du premier levier pivotant (11) pour l'amener de la première position dans la deuxième position et vice versa, est obtenu par le guidage de deux pivots (113e, 113g) situés sur le levier pivotant (11) dans chacune des rainures de commande de deux éléments de guidage (82a, 82b), disposés de façon fixe côté droit et côté gauche d'une paroi verticale (81a, 81b) du cadre de guidage (8).

3. Mécanisme de chargement de cassette selon la revendication 2, caractérisé en ce que le tracé de la rainure de guidage des éléments de guidage (82a, 82b) et le premier levier (11) assurent également une protection du tiroir de cassette (10) et de la cassette (1) lorsque celle-ci est mal insérée.

4. Mécanisme de chargement de cassette selon la revendication 1, caractérisé en ce que le mécanisme de chargement comporte, côté droit et côté gauche, un disque de commande (30a, 30b) muni d'un premier pivot d'entraînement(301, 301b) et d'un deuxième pivot d'entraînement (302a, 302b) et que le mouvement des disques de commande (30a, 30b) est synchronisé, sachant que le tiroir de cassette (10) peut être entraîné par les pivots (301a, 301b) et les pivots (302a, 302b) lorsqu'ils se mettent successivement en prise avec les guides correspondants du tiroir de cassette (10), et que le mouvement horizontal et vertical du tiroir de cassette (10) entre la position de chargement et la position de marche peut être commandé au moyen d'autres pivots (201a, 135a, 201b, 135b) et d'autres guides

5. Mécanisme de chargement de cassette selon la revendication 4, caractérisé en ce que chaque disque de commande (30a, 30b) comporte, du côté opposé au tiroir de cassette (10), une première rainure de guidage (32a, 32b) en forme de spirale qui est en prise avec un pivot (201a, 201b) situé sur le mécanisme de levage (20a, 20b) qui peut être déplacé verticalement, et que chaque disque de commande (30a, 30b) comporte, côté face au tiroir de cassette (10), une deuxième rainure de commande en forme de spirale (31a, 31b) prévue pour se mettre en prise avec un pivot (135a, 135b) situé sur le tiroir de cassette (10).

6. Mécanisme de chargement de cassette selon la revendication 5, caractérisé en ce que les guides de hauteur de la cassette (1), côté gauche et côté droit du tiroir de cassette (10), sont prévus sous la forme de ressorts à lames précontraints, que les guides de hauteurs présentent un faible jeu par rapport à la paroi supérieure du boîtier de la cassette (1) lorsque le tiroir de cassette (10) est en position de chargement, que les guides de hauteur constituent une butée pour la cassette (1) lorsque le cache-bande (3) et le deuxième levier pivotant (12) qui transmet la force d'insertion et d'éjection de la cassette (1) au tiroir de cassette (10) ou vice versa, sont pivotés vers le haut, et qu'en position de marche, les guides de hauteur sont en prise avec la paroi supérieur du boîtier (2a) de la cassette (1).

7. Mécanisme de chargement de cassette selon une des revendications 4 à 6, caractérisé en ce que le disque de commande côté droit (30a), du côté opposé au tiroir de cassette (10) comporte une troisième rainure de guidage en forme de spirale (34) qui est prévue pour la commande du volet du compartiment de la cassette (212) et du diaphragme (210) monté horizontalement de façon mobile sur la paroi côté droit (81a) et qui permet, lorsque le tiroir de cassette (10) est en position de chargement, d'obscurcir un palpeur de fin de bande servant à la surveillance de l'entraînement de la bande, et que l'obscurcissement de ce palpeur de fin de bande permet d'activer, lorsque le tiroir de cassette (10) est en position de chargement, l'entraînement moteur du tiroir de cassette (10) pour l'opération de chargement.

8. Mécanisme de chargement de cassette selon la revendication 7, caractérisé en ce que, grâce à l'influence d'un accumulateur de force (216), un pivot (215) situé sur le diaphragme coulissant et se mettant en prise avec la troisième rainure de guidage (34) est toujours en prise avec le disque de commande côté droit (30a).

9. Mécanisme de chargement de cassette selon la revendication 7 ou 8, caractérisé en ce que le diaphragme coulissant (210) est relié à un levier pivotant (211) qui constitue, avec le levier correspondant côté gauche, une butée pour le volet du compartiment de cassette (212) lors de la fermeture de ce dernier.

10. Mécanisme de chargement de cassette selon la revendication 9, caractérisé en ce que lors de l'opération de déchargement avant que la position de chargement du tiroir de cassette (10) ne soit atteinte, le levier (211) et le levier correspondant côté gauche se mettent en prise avec les pivots (135a, 135b) du tiroir de cassette (10).

11. Mécanisme de chargement de cassette selon la revendication 9 ou 10, caractérisé en ce qu'à la fin de l'opération de déchargement du tiroir de cassette (10), la cassette (1) peut être éjectée grâce à l'influence de l'accumulateur de force (216) sur le levier correspondant côté gauche, par l'intermédiaire du diaphragme coulissant (210).
